# EUROPEAN PATENT SPECIFICATION

(11) **EP 3 513 690 B1**
(45) Date of publication and mention of the grant of the patent: **02.09.2020**
(21) Application number: 18165610.9
(22) Date of filing: 04.04.2018
(51) Int. Cl.: A47J 31/36

(54) **LATERAL CAPSULE REJECTION MECHANISM FOR CAPSULE COFFEEMAKERS, AND CAPSULE COFFEEMAKERS**
SEITLICHER KAPSELAUSWURFMECHANISMUS FÜR KAPSELKAFFEEMASCHINEN UND KAPSELKAFFEEMASCHINEN
MÉCANISME DE REJET DE CAPSULE LATÉRAL POUR MACHINES À CAFÉ À CAPSULES ET MACHINES À CAFÉ À CAPSULES

(30) Priority: 19.01.2018 CN 201810055272
(43) Date of publication of application: 24.07.2019
(73) Proprietor: Ningbo Jinyu Electric Appliance Co., Ltd., Yuyao City, Zhejiang (CN)
(72) Inventor: SHI, Junda, Yuyao City, Zhejiang (CN); SHI, Zhongyu, Yuyao City, Zhejiang (CN); LIU, Shukuo, Yuyao City, Zhejiang (CN); LI, Shunhua, Yuyao City, Zhejiang (CN)
(74) Representative: Herrero & Asociados, S.L.

(56) References cited:
- WO-A1-2010/015427
- WO-A1-2015/173113
- CH-A2- 700 288

## Description

The present invention relates to the technical field of manufacturing of coffeemakers and in particular to a capsule rejection structure for capsule coffeemakers, and a capsule coffeemaker.

### BACKGROUND OF THE INVENTION

At present, in the existing coffeemakers, after the separation of coffee pods or capsules from the compression device, there are usually following two means to dispose the used capsules:
1. the used capsules have to be taken out by a hand; and
2. the used capsules fall into a hidden capsule collector inside the case of the coffeemaker, as shown in the CH700288A2.

Among the above two means, taking the used capsules out by a hand is not so easy and degrades the user's experience, while with the use of the hidden capsule collector, it is difficult for the user to know the water accumulation level inside the capsule collector and the excessive collection of the used capsules may block the moving mechanism to fail the coffeemaker in brewing coffee.

In addition, there are usually following four means for the existing coffeemakers to realize compression or rejection of coffee pods or capsules:
1. the compression or rejection of coffee pods or capsules is realized by turning the handle by a hand in aid of driving by a connecting rod;
2. the compression or rejection of coffee pods or capsules is realized by driving by a motor and a worm;
3. the compression or rejection of coffee pods or capsules is realized directly by long-distance driving by a large piston; and
4. the compression or rejection of coffee pods or capsules is realized by driving by a piston and a connecting rod.

Among the above four means, the hand-operated mechanism is not so easy for the user to operate and has high cost in use; the way of driving by a motor will result in high manufacturing and use cost; and the mechanism of driving by a large piston and the mechanism of driving by a piston and a connecting rod have the disadvantages of long driving distance, low driving speed, large required driving force, poor running stability, and the like. compared with other hydraulic systems, on the basis of same cost, the system of the present invention can lengthen the movement distance, quicken the movement speed and reduce the amount of liquid to be filled, and is mechanically simple and easy to operate.

### SUMMARYDESCRIPTION OF THE INVENTION

An objective of the present invention is to provide a lateral capsule rejection mechanism for capsule coffeemakers which can automatically reject/collect used capsules, and also provide a capsule coffeemaker which has the advantages of high running speed, high running stability, simple operation and low production cost, in order to solve the problems of complicated operation and low running speed in the prior art.

For this purpose, the present invention employs the following technical solutions. A lateral capsule rejection structure for capsule coffeemakers is provided, comprising an inclined unloading plate arranged inside a case for a capsule coffeemaker, a blocking plate arranged on a sidewall of the case, and a capsule collector arranged below the blocking plate; and a discharge port is formed on the sidewall of the case, and a top sidewall of the discharge port is movably connected to one end of the blocking plate.

Preferably, one end of the inclined unloading plate is fixedly connected to an inner sidewall of the case, and a distance from the other end of the inclined unloading plate to a bottom sidewall of the case is less than or equal to a distance from a bottom sidewall of the discharge port to the bottom sidewall of the case.

The present invention further provides a capsule coffeemaker, comprising: a case, a lateral capsule rejection structure for capsule coffeemakers as described above, and an automatic compressing, rejecting and brewing device for capsule coffeemakers; the lateral capsule rejection structure for capsule coffeemakers comprises an inclined unloading plate arranged inside a case for a capsule coffeemaker, a blocking plate arranged on a sidewall of the case, and a capsule collector arranged below the blocking plate, a discharge port is formed on the sidewall of the case, a top sidewall of the discharge port is movably connected to one end of the blocking plate, and the inclined unloading plate is arranged below the automatic compressing, rejecting and brewing device for capsule coffeemakers; the automatic compressing, rejecting and brewing device for capsule coffeemakers comprises a first bracket and a second bracket, which are arranged in parallel; a capsule container, a capsule clamping assembly and a compression mechanism are successively provided between the first bracket and the second bracket; each of the first bracket and the second bracket is provided with a spring assembly connected to the compression mechanism; the compression mechanism comprises a first piston compression assembly, a piston rod and a second piston compression assembly, which are connected successively; the first piston compression assembly comprises a sealed chamber, a hot water chamber, a first piston chamber and a support rod assembly, which are connected successively; the sealed chamber is communicated with the hot water chamber, and a hot water inlet is formed on the hot water chamber; a first fluid inlet is formed at one end of the first piston chamber, a first piston connected to the piston rod is provided inside the first piston chamber, and connecting shafts are pairwise provided at the other end of the first piston chamber; the support rod assembly comprises a first support rod and a second support rod, each comprising a straight compression lever and a rotary support block arranged on one side of the straight compression lever; the connecting shafts are movably connected to the straight compression lever; each of the first bracket and the second bracket is provided with a rotary limiting mechanism which comprises a limiting portion and a rotating portion connected together; during the movement of the first piston compression assembly toward the capsule container, the rotating portion of the rotary limiting mechanism rotates the first support rod and the second support rod upward, and the limiting portion of the rotary limiting mechanism supports and limits the first support rod and the second support rod; after the movement, the straight compression lever is in parallel to the movement direction of the first piston compression assembly; and the second piston compression assembly comprises a second piston chamber and a second piston provided in the second piston chamber, the second piston is connected to the piston rod, and a second fluid inlet is formed on the second piston chamber.

The spring assembly comprises a first return spring and a second return spring arranged pairwise, one end of the first return spring is connected to the first piston compression assembly and the other end of the first return spring is arranged on the first bracket or the second bracket, one end of the second return spring is connected to the second piston compression assembly and the other end of the second return spring is arranged on the first bracket or the second bracket.

Preferably, the capsule container comprises a housing; an accommodating chamber, which is open to the outside, is provided at one end of the housing, and used for accommodating a coffee capsule; a number of sharp cones are provided on the bottom of the accommodating chamber; and a through coffee outlet is formed at the other end of the housing.

Preferably, the capsule clamping assembly is connected to the first piston compression assembly; the capsule clamping assembly comprises two clampers, which are arranged symmetrically; the clamper comprises a clamper body and a curved groove formed on one side of the clamper body, and the curved groove comprises a capsule sliding segment and a capsule clamping segment; and the clamper body is connected to the sealed chamber of the first piston compression assembly.

Preferably, rotating shafts are pairwise provided on the sealed chamber and movably connected to an upper end of the clamper body, and a lower end of the clamper body is connected to the sealed chamber by a limiting spring.

Preferably, an annular sealing member is provided on an inner wall of the sealed chamber, and an inner wall of the annular sealing member is connected to an outer wall of the housing in a sealed manner.

Preferably, a through hole communicated with the hot water chamber is formed on a bottom surface of the sealed chamber, and a number of sharp cones are uniformly distributed on the bottom surface of the sealed chamber between the through hole and the annular sealing member.

Preferably, each of the first support rod and the second support rod is provided with a rotary hook which is connected to the rotary support block by a connecting plate; during the return process of the first piston compression assembly, when the first support rod and the second support rod cannot rotate downward due to their own gravity, the rotary hook is in contact connection to the rotating portion, and the rotary hook enables the first support rod and the second support rod to rotate downward.

Preferably, first fluid and second fluid are filled to the first piston chamber and the second piston chamber respectively by the first fluid inlet and the second fluid inlet; and the first fluid and the second fluid are water or hydraulic oil.

Compared with the prior art, the present invention has the following technical effects.
1. In the lateral capsule rejection structure for capsule coffeemakers of the present invention, by providing an inclined unloading plate below the automatic compressing, rejecting and brewing device for capsule coffeemakers, the used capsules can automatically fall; and by providing a capsule container outside the case of the coffeemaker, the user can readily observe the collection condition of the used capsules in the capsule container, and the user can remove the used capsules in time and know the water accumulation level inside the capsule container by visual check, so that it is convenient to avoid the overflow of water from the capsule container, bacteria are hard to breed due to the adequate ventilation, and the excessive collection of the used capsules between the moving mechanisms, which fails the coffeemaker in brewing coffee, will not occur.
2. In the capsule coffeemaker of the present invention, a first piston compression assembly, a piston rod and a second piston compression assembly, which are connected together, are used, so that the capsule is automatically compressed by the coordination of the first piston compression assembly and the second piston compression assembly and the compression speed and the movement stability are both improved. Wherein, the first piston compression assembly moves toward the capsule container under the pressure from the first fluid to compress a capsule into the capsule container; the second piston in the second piston compression assembly pushes the piston rod to move towards the capsule container under the pressure from the second fluid; and the second piston comes into contact connection to the support rod assembly in the first piston compression assembly to further urge the first piston compression assembly to compress the capsule. That is, the automatic compression of a capsule is completed by the coordination of the first piston and the second piston. Meanwhile, the presence of the first piston and the support rod assembly shortens the movement distance of the second piston, and the movement speed and the movement stability are improved.
3. In the capsule coffeemaker of the present invention, by providing a rotary hook on each of the first support rod and the second support rod, when the first support rod and the second support rod cannot rotate downward due to their own gravity, the rotary hook is in contact connection to the rotating portion, and the rotary hook enables the first support rod and the second support rod to rotate downward. The problem of unsuccessful return of the first piston compression assembly because the first support rod and the second support rod cannot fall due to external factors is avoided, and the movement precision of the device is improved.

### BRIEF DESCRIPTION OF THE DRAWINGS

To describe the technical solutions in the embodiments of the present invention or in the prior art more clearly, the accompanying drawings to be used in the description of the embodiments will be briefly described below. Apparently, the drawings described hereinafter are some of the embodiments of the present invention, and a person of ordinary skill in the art can obtain other drawings according to these drawings without any creative effort.
Fig. 1 is an overall structure diagram of a capsule coffeemaker according to the present invention;
Fig. 2 is an internal structure diagram of the capsule coffeemaker according to the present invention;
Fig. 3 is a first overall structure diagram of an automatic compressing, rejecting and brewing device for
   the capsule coffeemaker according to the present invention;
Fig. 4 is a second overall structure diagram of an automatic compressing, rejecting and brewing device for the capsule coffeemaker according to the present invention;
Fig. 5 is a sectional view of a connection structure of a capsule, a first piston compression assembly, a piston rod and a second piston compression assembly in the automatic compressing, rejecting and brewing device for the capsule coffeemaker according to the present invention;
Fig. 6 is a view of a connection structure of a capsule, a first piston compression assembly, a piston rod and a second piston compression assembly in the automatic compressing, rejecting and brewing device for the capsule coffeemaker according to the present invention;
Fig. 7 is an overall structure diagram of a first bracket or a second bracket in the automatic compressing, rejecting and brewing device for the capsule coffeemaker according to the present invention; and
Fig. 8 is a view of a connection structure of the first piston compression assembly, the piston rod and the second piston compression assembly in the automatic compressing, rejecting and brewing device for the capsule coffeemaker according to the present invention.

### PREFERRED EMBODIMENT OF THE INVENTION

The technical solutions in the embodiments of the present invention will be clearly and completely described below with reference to the accompanying drawings in the embodiments of the present invention. Apparently, the embodiments described herein are merely a part but not all of the embodiments of the present invention. All other embodiments obtained by a person of ordinary skill in the art without any creative effort on the basis of the embodiments in the present invention shall fall into the protection scope of the present invention.

An objective of the present invention is to provide a lateral capsule rejection mechanism for capsule coffeemakers which can automatically reject/collect used capsules, and also provide a capsule coffeemaker which has the advantages of high running speed, high running stability, simple operation and low production cost, in order to solve the problems of complicated operation and low running speed in the prior art.

To make the objectives, features and advantages of the present invention more obvious and comprehensible, the present invention will be further described below in detail by specific implementations with reference to the accompanying drawings.

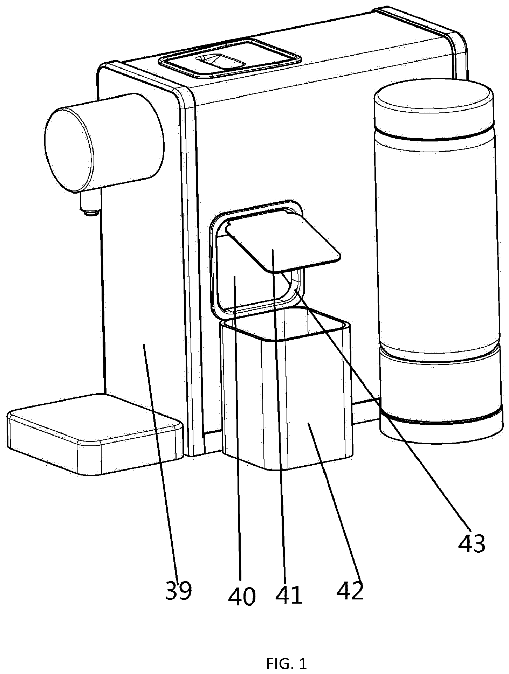

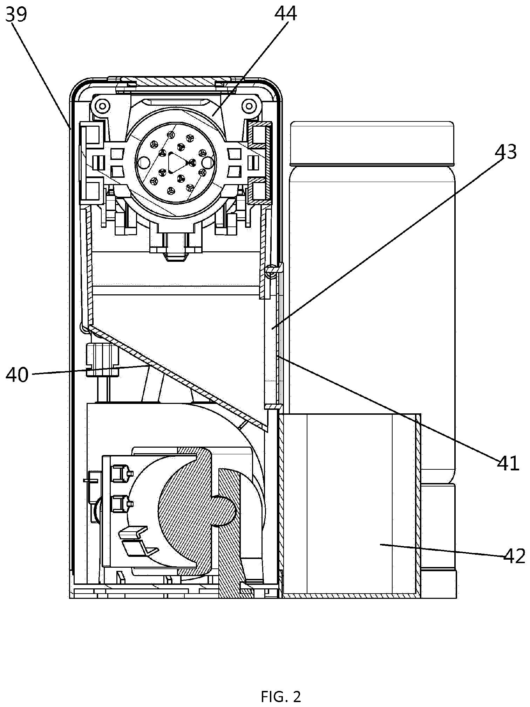

As shown in Fig.1 to Fig. 2, the present invention provides a lateral capsule rejection structure for capsule coffeemakers, comprising an inclined unloading plate 40 arranged inside a case 39 for a capsule coffeemaker, a blocking plate 41 arranged on a sidewall of the case 39, and a capsule collector 42 arranged below the blocking plate 41; and a discharge port 43 is formed on the sidewall of the case 39, and a top sidewall of the discharge port 43 is movably connected to one end of the blocking plate 41.

When the used capsule falls onto the inclined unloading plate 40, it moves toward the discharge port 43 on the sidewall of the case 39, hits against the blocking plate 41 on the sidewall of the case 39 to open the blocking plate 41, and then goes into the capsule collector 42 arranged below the blocking plate 41 and located outside the case 39 from the discharge port 43. In this way, the automatic discharge and collection of the used capsule is completed. In the present invention, by providing an inclined unloading plate below the automatic compressing, rejecting and brewing device for capsule coffeemakers, the used capsules can automatically fall; and by providing a capsule collector outside the case of the coffeemaker, the user can readily observe the collection condition of the used capsules in the capsule collector, and the user can remove the used capsules in time and know the water accumulation level inside the capsule collector by visual check, so that it is convenient to avoid the overflow of water from the capsule collector, bacteria are hard to breed due to the adequate ventilation, and the excessive collection of the used capsules between the moving mechanisms, which fails the coffeemaker in brewing coffee, will not occur.

To ensure that the used capsule can be discharged to the outside of the case 39 from the discharge port 43 after falling onto the inclined unloading plate 40, in the present invention, one end of the inclined unloading plate 40 is fixedly connected to an inner sidewall of the case 39, and a distance from the other end of the inclined unloading plate 40 to a bottom sidewall of the case 39 is less than or equal to a distance from a bottom sidewall of the discharge port 43 to the bottom sidewall of the case 39.A height from the one end of the inclined unloading plate 40 to the bottom sidewall of the case 39 is higher than that from the other end of the inclined unloading plate 40 to the bottom sidewall of the case 39.

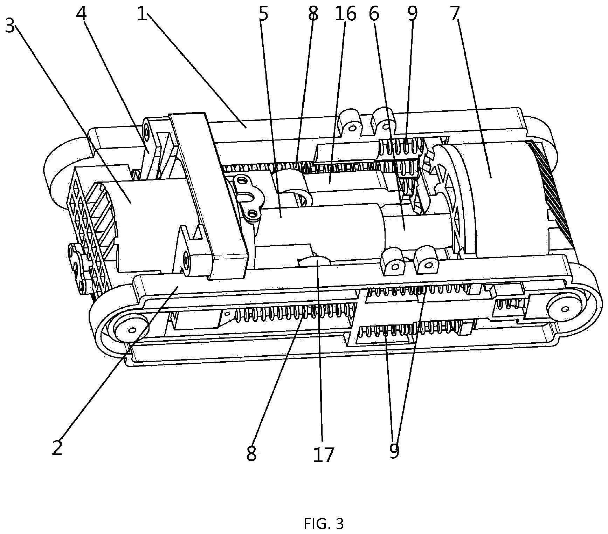

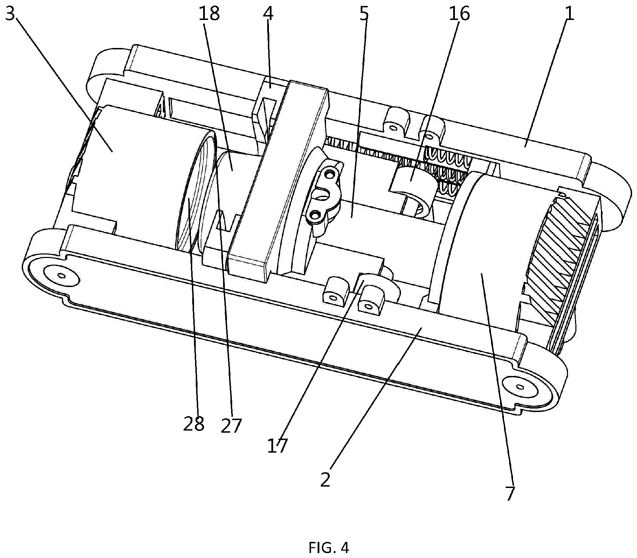

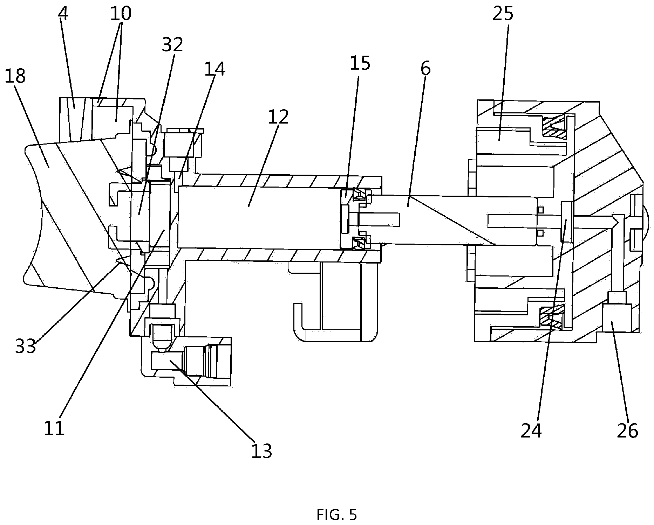

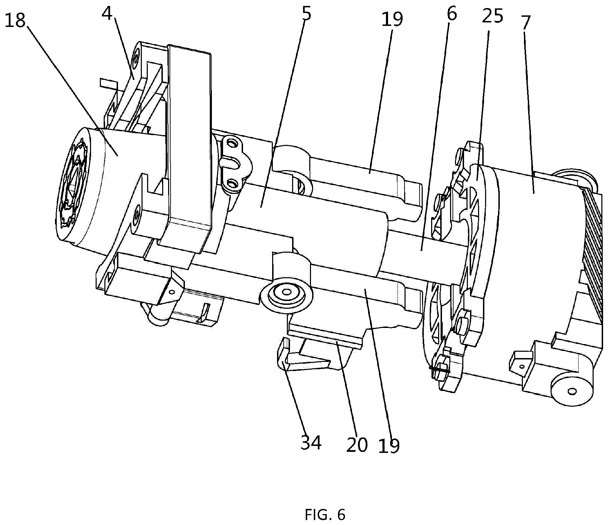

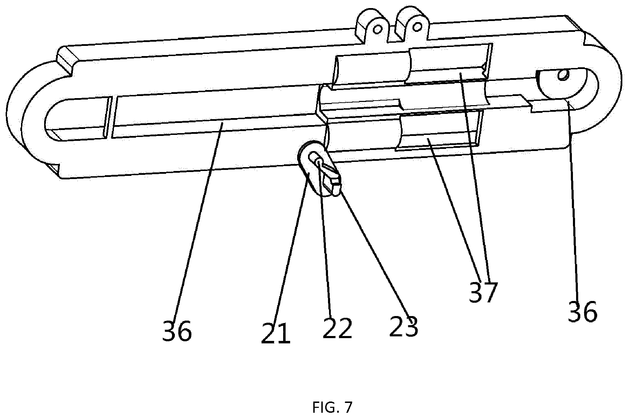

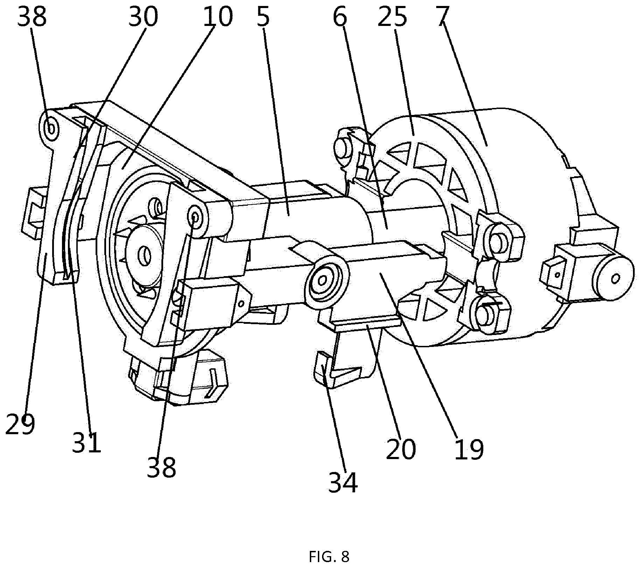

As shown in Figs. 1-8, the present invention further provides a capsule coffeemaker, comprising: a case 39, a lateral capsule rejection structure for capsule coffeemakers as described above, and an automatic compressing, rejecting and brewing device for capsule coffeemakers 44; the lateral capsule rejection structure for capsule coffeemakers 44 comprises an inclined unloading plate 40 arranged inside a case 39 for a capsule coffeemaker, a blocking plate 41 arranged on a sidewall of the case 39, and a capsule collector 42 arranged below the blocking plate 41, a discharge port 43 is formed on the sidewall of the case 39, a top sidewall of the discharge port 43 is movably connected to one end of the blocking plate 41, and the inclined unloading plate 40 is arranged below the automatic compressing, rejecting and brewing device for capsule coffeemakers 44; the automatic compressing, rejecting and brewing device for capsule coffeemakers 44 comprises a first bracket 1 and a second bracket 2, which are arranged in parallel; a capsule container 3, a capsule clamping assembly 4 and a compression mechanism are successively provided between the first bracket 1 and the second bracket 2; each of the first bracket 1 and the second bracket 2 is provided with a spring assembly connected to the compression mechanism; the compression mechanism comprises a first piston compression assembly 5, a piston rod 6 and a second piston compression assembly 7, which are connected successively; the first piston compression assembly 5 comprises a sealed chamber 10, a hot water chamber 11, a first piston chamber 12 and a support rod assembly, which are connected successively; the sealed chamber 10 is communicated with the hot water chamber 11, and a hot water inlet 13 is formed on the hot water chamber 11; a first fluid inlet 14 is formed at one end of the first piston chamber 12, a first piston 15 connected to the piston rod 6 is provided inside the first piston chamber 12, and connecting shafts are pairwise provided at the other end of the first piston chamber 12; the support rod assembly comprises a first support rod 16 and a second support rod 17, each comprising a straight compression lever 19 and a rotary support block 20 arranged on one side of the straight compression lever 19; the connecting shafts are movably connected to the straight compression lever 19; each of the first bracket 1 and the second bracket 2 is provided with a rotary limiting mechanism 21 which comprises a limiting portion 22 and a rotating portion 23 connected together; during the movement of the first piston compression assembly 5 toward the capsule container 3, the rotating portion 23 of the rotary limiting mechanism 21 rotates the first support rod 1 and the second support rod 2 upward, and the limiting portion 22 of the rotary limiting mechanism 21 supports and limits the first support rod 16 and the second support rod 17; after the movement, the straight compression lever 19 is in parallel to the movement direction of the first piston compression assembly 5; and the second piston compression assembly 7 comprises a second piston chamber 24 and a second piston 25 provided in the second piston chamber 24, the second piston 25 is connected to the piston rod 6, and a second fluid inlet 26 is formed on the second piston chamber 24; and
the spring assembly comprises a first return spring 8 and a second return spring 9 arranged pairwise, one end of the first return spring 8 is connected to the first piston compression assembly 5 and the other end of the first return spring 8 is arranged on the first bracket 1 or the second bracket 2, one end of the second return spring 9 is connected to the second piston compression assembly 7 and the other end of the second return spring 9 is arranged on the first bracket 1 or the second bracket 2.

Wherein, the capsule container 3 is fixedly connected to the first bracket 1 and the second bracket 2, the capsule clamping assembly 4 is fixedly connected to an end of the sealed chamber 10 of the first piston compression assembly 5, and the first return spring 8 is connected to the outer wall of the sealed chamber 10, the hot water chamber 11 or the first piston chamber 12 of the first piston compression assembly 5. To ensure the movement stability of the first piston compression assembly 5, a through groove is formed on the first bracket 1 and the second bracket 2, and a guide block matched with the through groove is provided on the outer wall of the sealed chamber 10, the hot water chamber 11 or the first piston chamber 12. Preferably, the guide block is connected to one end of the first return spring 8 and the other end of the first return spring 8 is arranged on the first bracket 1 or the second bracket 2; and the first return spring 8 and the second return spring 9 are placed in the first spring accommodating groove 36 and the second spring accommodating groove 37 on the first bracket 1 and the second bracket 2, respectively.

In the present invention, the first piston compression assembly 5, the piston rod 6 and the second piston compression assembly 7, which are connected together, are used, so that the capsule 18 is automatically compressed by the coordination of the first piston compression assembly 5 and the second piston compression assembly 7 and the compression speed and the movement stability are both improved. Wherein, the first piston compression assembly 5 moves toward the capsule container 3 under the pressure from the first fluid to compress a capsule 18 into the capsule container 3; the second piston 25 in the second piston compression assembly 7 pushes the piston rod 6 to move towards the capsule container 3 under the pressure from the second fluid; and the second piston 25 comes into contact connection to the support rod assembly in the first piston compression assembly 5 to further urge the first piston compression assembly 5 to compress the capsule 18. That is, the automatic compression of a capsule is completed by the coordination of the first piston 15 and the second piston 25. Meanwhile, since the presence of the first piston 15 and the support rod assembly shortens the movement distance of the second piston 25, the movement speed and the movement stability are improved. Furthermore, driving the piston by the first fluid and the second fluid can reuse the first fluid and the second fluid, so that the energy utilization is improved, and the use and manufacturing cost is reduced.

In the present invention, the capsule container 3 comprises a housing 27; an accommodating chamber 28, which is open to the outside, is provided at one end of the housing 27, and used for accommodating a coffee capsule 18; a number of sharp cones 33 are provided on the bottom of the accommodating chamber 28; and a through coffee outlet is formed at the other end of the housing 27. When the capsule 18 goes into the capsule container 3, first, it goes into the accommodating chamber 28, and then comes into contact with the sharp cones 33 on the bottom of the accommodating chamber 28 as it moves, where the sharp cones 33 pierces the capsule 18. Preferably, to be convenient for coffee to flow from the capsule 18, a flow channel is formed on each of the sharp cones 33. The coffee from the capsule is uniformly mixed in the capsule container 3 and flows out from the coffee outlet for drinking.

In the present invention, the capsule clamping assembly 4 is connected to the first piston compression assembly 5; the capsule clamping assembly 4 comprises two clampers, which are arranged symmetrically; the clamper comprises a clamper body 29 and a curved groove formed on one side of the clamper body 29, and the curved groove comprises a capsule sliding segment 30 and a capsule clamping segment 31; and the clamper body 29 is connected to the sealed chamber 10 of the first piston compression assembly 5. Wherein, an end of the capsule 18 with a skirt is placed into the capsule sliding segment 30 of the curved groove, the capsule 18 goes into the capsule clamping segment 31 below the capsule sliding segment 30, and the capsule 18 is clamped by the capsule clamping segments 31 of the two clampers to avoid the falling of the capsule 18. It is to be noted that the shortest distance between the two clampers, which are arranged symmetrically, is greater than or equal to the diameter of the capsule container 3, and that the distance between the two clampers, which are arranged symmetrically, is less than the diameter of the capsule skirt, so that a side of the clamper body 29 can come into contact with the skirt of the capsule 18 when the capsule clamping assembly 4 returns together with the first piston clamping assembly 5, to further separate the capsule 18 from the capsule container 3, to thus complete the automatic falling of the capsule 18. Preferably, the axis of symmetry of the two clampers, which are arranged symmetrically, and the axis of the capsule container 3 are in a same line.

To ensure the rotation of the two clampers relative to each other, and to avoid the problem of difficult separation of the capsule 18 because of the locking of the capsule skirt inside the curved groove when the capsule 18 is separated from the curved groove due to the constant distance between the clampers if the two clampers are fixedly connected to the sealed chamber 10, in the present invention, rotating shafts 38 are pairwise provided on the sealed chamber 10 and movably connected to an upper end of the clamper body 29, and a lower end of the clamper body 29 is connected to the sealed chamber 10 by a limiting spring. When the capsule 18 is separated from the curved groove, the capsule skirt applies an outward radial force (i.e., a radial force vertical to the axis of the two clampers) to the clamper body 29, so that the clamper body 29 rotates outward around the rotating shafts 38, the skirt of the capsule 18 is separated smoothly, the capsule goes into the capsule container 3 quickly, accurately and stably, and the capsule skirt is clamped and sealed by the sealed chamber 10 and the capsule container 3.

To improve the sealed performance between the sealed chamber 10 and the housing 27 of the capsule container 3 to avoid the leakage of coffee, in the present invention, an annular sealing member is provided on an inner wall of the sealed chamber 10, and an inner wall of the annular sealing member is connected to an outer wall of the housing 27 in a sealed manner.

In the present invention, a through hole 32 communicated with the hot water chamber 11 is formed on a bottom surface of the sealed chamber 10. Preferably, an extension tube (preferably, the extension tube has a tip or does not have a tip), having a diameter not less than the diameter of the through hole 32 so that the extension tube can be inserted into the capsule 18, is provided at the through hole 32; and a number of sharp cones 33 are uniformly distributed on the bottom surface of the sealed chamber 10 between the through hole 32 and the annular sealing member. Wherein, in the present invention, to be convenient for hot water to flow into the capsule 18 or for coffee to flow out from the capsule 18, central through holes or sidewall through holes are formed on the sharp cones 33 (sharp cones 33 on the bottom of the accommodating chamber 28 and on the bottom of the sealed chamber) so that hot water or coffee can flow into or out from the capsule from the central through holes or sidewall through holes.

In the present invention, each of the first support rod 16 and the second support rod 17 is provided with a rotary hook 34 which is connected to the rotary support block 20 by a connecting plate; during the return process of the first piston compression assembly 5, when the first support rod 16 and the second support rod 17 cannot rotate downward due to their own gravity, the rotary hook 34 is in contact connection to the rotating portion 23, and the rotary hook 34 enables the first support rod 16 and the second support rod 17 to rotate downward. That is, by providing a rotary hook 34 on each of the first support rod 16 and the second support rod 17, when the first support rod 16 and the second support rod 17 cannot rotate downward due to their own gravity, the rotary hook 34 is in contact connection to the rotating portion 23, and the rotary hook 34 enables the first support rod 16 and the second support rod 17 to rotate downward. The problem of unsuccessful return of the first piston compression assembly 5 because the first support rod 16 and the second support rod 17 cannot fall due to external factors is avoided, and the movement precision of the device is improved.

In the present invention, first fluid and second fluid are filled to the first piston chamber 12 and the second piston chamber 24 respectively by the first fluid inlet 14 and the second fluid inlet 26; and the first fluid and the second fluid are water or hydraulic oil.

The present invention further comprises an automatic compressing, rejecting and brewing method for capsule coffeemakers by using the device described above, comprising the following steps:
a capsule 18 is placed into a capsule groove from the capsule sliding segment 30 of the two clampers of the capsule clamping assembly 4, and clamped by the capsule clamping segment 31;
first fluid is supplied into the first piston chamber 12 from the first fluid inlet 14 on the first piston chamber 12 in the first piston compression assembly 5, the first fluid drives the sealed chamber 10, the hot water chamber 11, the first piston chamber 12 and the support rod assembly in the first piston compression assembly 5 to move towards the capsule container 3 and drives the capsule 18 fixed in the capsule clamping assembly 4 to separate from the capsule groove to go into the capsule container 3, and now the support rod assembly movably connected to the first piston chamber 12 starts rotating under the effect of the rotary limiting mechanism 21, wherein the support rod assembly comprises a first support rod 16 and a second support rod 17, each comprising a straight compression lever 19 and a rotary support block 20 arranged on one side of the straight compression lever 19; the connecting shafts are movably connected to the straight compression lever 19; each of the first bracket 1 and the second bracket 2 is provided with a rotary limiting mechanism 21 which comprises a limiting portion 22 and a rotating portion 23 connected together; during the movement of the first piston compression assembly 5 toward the capsule container 3, the rotating portion 23 of the rotary limiting mechanism 21 rotates the first support rod 16 and the second support rod 17 upward, and the limiting portion 22 of the rotary limiting mechanism 21 supports and limits the first support rod 16 and the second support rod 17;
Second fluid is supplied into the second piston chamber 24 from the second fluid inlet 26 on the second piston chamber 24 in the second piston compression assembly 7, the second fluid drives the second piston 25 and the piston rod 6 to move towards the capsule container 3, the second piston 25 comes into contact with the straight compression lever 19 and compresses the straight compression lever 19 so that the sealed chamber 10 is in sealed connection to the capsule container 3, and the sharp cones 33 on the bottom of the sealed chamber 10 and on the bottom of the capsule container 3 pierce the capsule 18;
hot water flows into the hot water chamber 11 from the hot water inlet 13 on the hot water chamber 11 in the first piston compression assembly 5, and into the sealed chamber 10, the capsule 18 and the capsule container 3, for making coffee;
at the end of making coffee, coffee flows out from the coffee outlet on the capsule container 3; when it is necessary to replace the capsule 18, second fluid inside the second piston chamber 24 is released and the second piston 25 is driven by the second return spring 9 to return to its original position, and the first fluid inside the first piston chamber 12 is released and the first piston compression assembly 5 is driven by the first return spring 8 to return to its original position, and during the return process, the support rod assembly in the first piston compression assembly 5 rotates downward under the gravity; and
the sealed chamber 10 is separated from the capsule container 3, the capsule 18 automatically falls, a new capsule 18 is placed in the capsule clamping assembly 4, and the above steps are repeated.

In the present invention, during the return process of the first piston compression assembly 5 when driven by the first return spring 8, when the support rod assembly in the first piston compression assembly 5 cannot rotate downward due to its own gravity, the rotary hooks 34 are arranged on the first support rod 16 and the second support rod 17 and connected to the rotary support block 20 by a connecting plate. During the return process of the first piston compression assembly 5, the rotary hook 34 is in contact connection to the rotary portion 23, and the rotary hook 34 enables the first support rod 16 and the second support rod 17 to rotate downward.

### LIST OF REFERENCES

- 1:: first bracket;
- 2:: second bracket;
- 3:: capsule container;
- 4:: capsule clamping assembly;
- 5:: first piston compression assembly;
- 6:: piston rod;
- 7:: second piston compression assembly;
- 8:: first return spring;
- 9:: second return spring;
- 10:: sealed chamber;
- 11:: hot water chamber;
- 12:: first piston chamber;
- 13:: hot water inlet;
- 14:: first fluid inlet;
- 15:: first piston;
- 16:: first support rod;
- 17:: second support rod;
- 18:: capsule;
- 19:: straight compression lever;
- 20:: rotary support block;
- 21:: rotary limiting mechanism;
- 22:: limiting portion;
- 23:: rotating portion;
- 24:: second piston chamber;
- 25:: second piston;
- 26:: second fluid inlet;
- 27:: housing;
- 28:: accommodating chamber;
- 29:: clamper body;
- 30:: capsule sliding segment;
- 31:: capsule clamping segment;
- 32:: through hole;
- 33:: sharp cone;
- 34:: rotary hook;
- 36:: first spring accommodating groove;
- 37:: second spring accommodating groove;
- 38:: rotating shaft
- 39:: case;
- 40:: inclined unloading plate;
- 41:: blocking plate;
- 42:: capsule collector;
- 43:: discharge port; and
- 44:: automatic compressing, rejecting and brewing device for capsule coffeemakers.

## Claims

1. A lateral capsule rejection structure for capsule coffeemakers, having a case (39) for a capsule coffeemaker, a discharge port (43) and a capsule collector (42), **characterised in that** an inclined unloading plate (40) is arranged inside the case (39) for a capsule coffeemaker; a blocking plate (41) is arranged on a sidewall of the case (39); the capsule collector (42) is arranged below the blocking plate (41); and the discharge port (43) is formed on the sidewall of the case (39), and a top sidewall of the discharge port (43) is movably connected to one end of the blocking plate (41).

2. The lateral capsule rejection structure for capsule coffeemakers according to claim 1, wherein one end of the inclined unloading plate (40) is fixedly connected to an inner sidewall of the case (39), and a distance from the other end of the inclined unloading plate (40) to a bottom sidewall of the case (39) is less than or equal to a distance from a bottom sidewall of the discharge port (43) to the bottom sidewall of the case (39).

3. A capsule coffeemaker, comprising: a case (39), a lateral capsule rejection structure for capsule coffeemakers according to any one of claims 1 to 2, and an automatic compressing, rejecting and brewing device for capsule coffeemakers (44); whereby the inclined unloading plate (40) is arranged below the automatic compressing, rejecting and brewing device for capsule coffeemakers (44); the automatic compressing, rejecting and brewing device for capsule coffeemakers (44) comprises a first bracket (1) and a second bracket (2), which are arranged in parallel; a capsule container (3), a capsule clamping assembly (4) and a compression mechanism are successively provided between the first bracket (1) and the second bracket (2); each of the first bracket (1) and the second bracket (2) is provided with a spring assembly connected to the compression mechanism; the compression mechanism comprises a first piston compression assembly (5), a piston rod (6) and a second piston compression assembly (7), which are connected successively; the first piston compression assembly (5) comprises a sealed chamber (10), a hot water chamber (11), a first piston chamber (12) and a support rod assembly, which are connected successively; the sealed chamber (10) is communicated with the hot water chamber (11), and a hot water inlet (13) is formed on the hot water chamber (11); a first fluid inlet (14) is formed at one end of the first piston chamber (12), a first piston (15) connected to the piston rod (6) is provided inside the first piston chamber (12), and connecting shafts are pairwise provided at the other end of the first piston chamber (12); the support rod assembly comprises a first support rod (16) and a second support rod (17), each comprising a straight compression lever (19) and a rotary support block (20) arranged on one side of the straight compression lever (19); the connecting shafts are movably connected to the straight compression lever (19); each of the first bracket (1) and the second bracket (2) is provided with a rotary limiting mechanism (21) which comprises a limiting portion (22) and a rotating portion (23) connected together; during the movement of the first piston compression assembly (5) toward the capsule container (3), the rotating portion (23) of the rotary limiting mechanism (21) rotates the first support rod (16) and the second support rod (17) upward, and the limiting portion (22) of the rotary limiting mechanism (21) supports and limits the first support rod (16) and the second support rod (17); after the movement, the straight compression lever (19) is in parallel to the movement direction of the first piston compression assembly (5); and the second piston compression assembly (7) comprises a second piston chamber (24) and a second piston (25) provided in the second piston chamber (24), the second piston (25) is connected to the piston rod (6), and a second fluid inlet (26) is formed on the second piston chamber (24) ; and
the spring assembly comprises a first return spring (8) and a second return spring (9) arranged pairwise, one end of the first return spring (8) is connected to the first piston compression assembly (5) and the other end of the first return spring (8) is arranged on the first bracket (1) or the second bracket (2), one end of the second return spring (9) is connected to the second piston compression assembly (7) and the other end of the second return spring (9) is arranged on the first bracket (1) or the second bracket (2).

4. The capsule coffeemaker according to claim 3, wherein the capsule container (3) comprises a housing (27); an accommodating chamber (28), which is open to the outside, is provided at one end of the housing (27), and used for accommodating a coffee capsule (18); a number of sharp cones (33) are provided on the bottom of the accommodating chamber (28); and a through coffee outlet is formed at the other end of the housing (27).

5. The capsule coffeemakers according to claim 4, wherein the capsule clamping assembly (4) is connected to the first piston compression assembly (5); the capsule clamping assembly (4) comprises two clampers, which are arranged symmetrically; the clamper comprises a clamper body (29) and a curved groove formed on one side of the clamper body (29), and the curved groove comprises a capsule sliding segment (30) and a capsule clamping segment (31); and the clamper body (29) is connected to the sealed chamber (10) of the first piston compression assembly (5).

6. The capsule coffeemaker according to claim 5, wherein rotating shafts (38) are pairwise provided on the sealed chamber (10) and movably connected to an upper end of the clamper body (29), and a lower end of the clamper body (29) is connected to the sealed chamber (10) by a limiting spring.

7. The capsule coffeemaker according to claim 3, wherein an annular sealing member is provided on an inner wall of the sealed chamber (10), and an inner wall of the annular sealing member is connected to an outer wall of the housing (27) in a sealed manner.

8. The capsule coffeemaker according to claim 7, wherein a through hole (32) communicated with the hot water chamber (11) is formed on a bottom surface of the sealed chamber (10), and a number of sharp cones (33) are uniformly distributed on the bottom surface of the sealed chamber (10) between the through hole (32) and the annular sealing member.

9. The capsule coffeemaker according to claim 3, wherein each of the first support rod (16) and the second support rod (17) is provided with a rotary hook (34) which is connected to the rotary support block (20) by a connecting plate; during the return process of the first piston compression assembly (5), when the first support rod (16) and the second support rod (17) cannot rotate downward due to their own gravity, the rotary hook (34) is in contact connection to the rotating portion (23), and the rotary hook (34) enables the first support rod (16) and the second support rod (17) to rotate downward.

10. The capsule coffeemaker according to claim 3, wherein first fluid and second fluid are filled to the first piston chamber (12) and the second piston chamber (24) respectively by the first fluid inlet (14) and the second fluid inlet (26); and the first fluid and the second fluid are water or hydraulic oil.

## Patentansprüche

1. Seitliche Kapselauswurfstruktur für Kapselkaffeemaschinen, die ein Gehäuse (39) für eine Kapselkaffeemaschine, eine Austrittsöffnung (43) und einen Kapselsammler (42) aufweist, **dadurch gekennzeichnet, dass** eine geneigte Entladeplatte (40) innerhalb des Gehäuses (39) für eine Kapselkaffeemaschine angeordnet ist; eine Sperrplatte (41) auf einer Seitenwand des Gehäuses (39) angeordnet ist; der Kapselsammler (42) unterhalb der Sperrplatte (41) angeordnet ist; und die Austrittsöffnung (43) auf der Seitenwand des Gehäuses (39) gebildet ist und eine obere Seitenwand der Austrittsöffnung (43) mit einem Ende der Sperrplatte (41) beweglich verbunden ist.

2. Seitliche Kapselauswurfstruktur für Kapselkaffeemaschinen nach Anspruch 1, wobei ein Ende der geneigten Entladeplatte (40) mit einer inneren Seitenwand des Gehäuses (39) fest verbunden ist und ein Abstand von dem anderen Ende der geneigten Entladeplatte (40) zu einer unteren Seitenwand des Gehäuses (39) kleiner oder gleich ist wie ein Abstand von einer unteren Seitenwand der Austrittsöffnung (43) zu der unteren Seitenwand des Gehäuses (39).

3. Kapselkaffeemaschine, umfassend: ein Gehäuse (39), eine seitliche Kapselauswurfstruktur für Kapselkaffeemaschinen nach einem der Ansprüche 1 bis 2 und eine automatische Kompressions-, Auswurf- und Brühvorrichtung für Kapselkaffeemaschinen (44); wobei die geneigte Entladeplatte (40) unterhalb der automatischen Kompressions-, Auswurf- und Brühvorrichtung für Kapselkaffeemaschinen (44) angeordnet ist; die automatische Kompressions-, Auswurf- und Brühvorrichtung für Kapselkaffeemaschinen (44) eine erste Halterung (1) und eine zweite Halterung (2) umfasst, die parallel angeordnet sind; ein Kapselbehälter (3), eine Kapselklemmbaugruppe (4) und ein Kompressionsmechanismus nacheinander zwischen der ersten Halterung (1) und der zweiten Halterung (2) vorgesehen sind; jede der ersten Halterung (1) und der zweiten Halterung (2) mit einer Federbaugruppe versehen ist, die mit dem Kompressionsmechanismus verbunden ist; der Kompressionsmechanismus eine erste Kolbenkompressionsbaugruppe (5), eine Kolbenstange (6) und eine zweite Kolbenkompressionsbaugruppe (7) umfasst, die nacheinander verbunden sind; die erste Kolbenkompressionsbaugruppe (5) eine dichte Kammer (10), eine Heißwasserkammer (11), eine erste Kolbenkammer (12) und eine Stützstangenbaugruppe umfasst, die nacheinander verbunden sind; die dichte Kammer (10) mit der Heißwasserkammer (11) kommuniziert und ein Heißwassereinlass (13) an der Heißwasserkammer (11) gebildet ist; ein erster Fluideinlass (14) an einem Ende der ersten Kolbenkammer (12) gebildet ist, ein erster Kolben (15), der mit der Kolbenstange (6) verbunden ist, innerhalb der ersten Kolbenkammer (12) vorgesehen ist und Verbindungswellen paarweise an dem anderen Ende der ersten Kolbenkammer (12) vorgesehen sind; die Stützstangenbaugruppe eine erste Stützstange (16) und eine zweite Stützstange (17) umfasst, die jeweils einen geraden Kompressionshebel (19) und einen drehbaren Stützblock (20) umfassen, der auf einer Seite des geraden Kompressionshebels (19) angeordnet ist; die Verbindungswellen mit dem geraden Kompressionshebel (19) beweglich verbunden sind; jede der ersten Halterung (1) und der zweiten Halterung (2) mit einem drehbaren Begrenzungsmechanismus (21) versehen ist, der einen Begrenzungsabschnitt (22) und einen Drehabschnitt (23) umfasst, die miteinander verbunden sind; während der Bewegung der ersten Kolbenkompressionsbaugruppe (5) zu dem Kapselbehälter (3) der Drehabschnitt (23) des drehbaren Begrenzungsmechanismus (21) die erste Stützstange (16) und die zweite Stützstange (17) nach oben dreht und der Begrenzungsabschnitt (22) des drehbaren Begrenzungsmechanismus (21) die erste Stützstange (16) und die zweite Stützstange (17) stützt und begrenzt; nach der Bewegung der gerade Kompressionshebel (19) parallel zu der Bewegungsrichtung der ersten Kolbenkompressionsbaugruppe (5) liegt; und die zweite Kolbenkompressionsbaugruppe (7) eine zweite Kolbenkammer (24) und einen zweiten Kolben (25) umfasst, der in der zweiten Kolbenkammer (24) vorgesehen ist, der zweite Kolben (25) mit der Kolbenstange (6) verbunden ist und ein zweiter Fluideinlass (26) an der zweiten Kolbenkammer (24) gebildet ist; und
die Federbaugruppe eine erste Rückstellfeder (8) und eine zweite Rückstellfeder (9) umfasst, die paarweise angeordnet sind, ein Ende der ersten Rückstellfeder (8) mit der ersten Kolbenkompressionsbaugruppe (5) verbunden ist und das andere Ende der ersten Rückstellfeder (8) auf der ersten Halterung (1) oder der zweiten Halterung (2) angeordnet ist, ein Ende der zweiten Rückstellfeder (9) mit der zweiten Kolbenkompressionsbaugruppe (7) verbunden ist und das andere Ende der zweiten Rückstellfeder (9) auf der ersten Halterung (1) oder der zweiten Halterung (2) angeordnet ist.

4. Kapselkaffeemaschine nach Anspruch 3, wobei der Kapselbehälter (3) ein Gehäuse (27) umfasst; eine Unterbringungskammer (28), die nach außen offen ist, an einem Ende des Gehäuses (27) vorgesehen ist und zum Unterbringen einer Kaffeekapsel (18) verwendet wird; eine Anzahl von spitzen Kegeln (33) auf dem Boden der Unterbringungskammer (28) vorgesehen ist; und ein durchgehender Kaffeeauslass an dem anderen Ende des Gehäuses (27) gebildet ist.

5. Kapselkaffeemaschine nach Anspruch 4, wobei die Kapselklemmbaugruppe (4) mit der ersten Kolbenkompressionsbaugruppe (5) verbunden ist; die Kapselklemmbaugruppe (4) zwei Klemmen umfasst, die symmetrisch angeordnet sind; die Klemme einen Klemmkörper (29) und eine gekrümmte Nut umfasst, die auf einer Seite des Klemmkörpers (29) gebildet ist, und die gekrümmte Nut ein Kapselgleitsegment (30) und ein Kapselklemmsegment (31) umfasst; und der Klemmkörper (29) mit der dichten Kammer (10) der ersten Kolbenkompressionsbaugruppe (5) verbunden ist.

6. Kapselkaffeemaschine nach Anspruch 5, wobei Drehwellen (38) auf der dichten Kammer (10) paarweise vorgesehen sind und mit einem oberen Ende des Klemmkörpers (29) beweglich verbunden sind, und ein unteres Ende des Klemmkörpers (29) mit der dichten Kammer (10) durch eine Begrenzungsfeder verbunden ist.

7. Kapselkaffeemaschine nach Anspruch 3, wobei ein ringförmiges Dichtungselement auf einer Innenwand der dichten Kammer (10) vorgesehen ist und eine Innenwand des ringförmigen Dichtungselements mit einer Außenwand des Gehäuses (27) dicht verbunden ist.

8. Kapselkaffeemaschine nach Anspruch 7, wobei ein Durchgangsloch (32), das mit der Heißwasserkammer (11) kommuniziert, auf einer unteren Oberfläche der dichten Kammer (10) gebildet ist, und eine Anzahl von spitzen Kegeln (33) gleichmäßig auf der unteren Oberfläche der dichten Kammer (10) zwischen dem Durchgangsloch (32) und dem ringförmigen Dichtungselement verteilt ist.

9. Kapselkaffeemaschine nach Anspruch 3, wobei jede der ersten Stützstange (16) und der zweiten Stützstange (17) mit einem drehbaren Haken (34) versehen ist, der mit dem drehbaren Stützblock (20) mittels einer Verbindungsplatte verbunden ist; während des Rückstellungsvorgangs der ersten Kolbenkompressionsbaugruppe (5), wenn sich die erste Stützstange (16) und die zweite Stützstange (17) aufgrund ihrer eigenen Schwerkraft nicht nach unten drehen können, der drehbare Haken (34) in Kontaktverbindung mit dem Drehabschnitt (23) ist, und der drehbare Haken (34) der ersten Stützstange (16) und der zweiten Stützstange (17) ermöglicht, sich nach unten zu drehen.

10. Kapselkaffeemaschine nach Anspruch 3, wobei das erste Fluid und zweite Fluid in die erste Kolbenkammer (12) und die zweite Kolbenkammer (24) jeweils durch den ersten Fluideinlass (14) und den zweiten Fluideinlass (26) gefüllt werden; und das erste Fluid und das zweite Fluid Wasser oder Hydrauliköl sind.

## Revendications

1. Structure de rejet latérale de capsule pour des machines à café à capsules, ayant une enveloppe (39) pour une machine à café à capsules, un orifice d'évacuation (43) et un collecteur de capsules (42), **caractérisée en ce qu'**une plaque de décharge inclinée (40) est agencée à l'intérieur de l'enveloppe (39) pour une machine à café à capsules ; une plaque de blocage (41) est agencée sur une paroi latérale de l'enveloppe (39) ; le collecteur de capsules (42) est agencé en dessous de la plaque de blocage (41) ; et l'orifice d'évacuation (43) est formé sur la paroi latérale de l'enveloppe (39), et une paroi latérale supérieure de l'orifice d'évacuation (43) est raccordée de manière mobile à une extrémité de la plaque de blocage (41).

2. Structure de rejet latérale de capsule pour des machines à café à capsules selon la revendication 1, dans laquelle une extrémité de la plaque de décharge inclinée (40) est raccordée de manière fixe à une paroi latérale interne de l'enveloppe (39), et une distance à partir de l'autre extrémité de la plaque de décharge inclinée (40) jusqu'à une paroi latérale inférieure de l'enveloppe (39) est inférieure ou égale à une distance à partir d'une paroi latérale inférieure de l'orifice d'évacuation (43) jusqu'à la paroi latérale inférieure de l'enveloppe (39).

3. Machine à café à capsules, comprenant : une enveloppe (39), une structure de rejet latérale de capsule pour des machines à café à capsules selon l'une quelconque des revendications 1 à 2, et un dispositif automatique de compression, de rejet et de percolation pour des machines à café à capsules (44) ;
où la plaque de décharge inclinée (40) est agencée en dessous du dispositif automatique de compression, de rejet et de percolation pour des machines à café à capsules (44) ; le dispositif automatique de compression, de rejet et de percolation pour des machines à café à capsules (44) comprend une première bride (1) et une deuxième bride (2), qui sont agencées en parallèle ; un contenant de capsules (3), un ensemble de serrage de capsule (4) et un mécanisme de compression sont prévus successivement entre la première bride (1) et la deuxième bride (2) ; chaque bride parmi la première bride (1) et la deuxième bride (2) est pourvue d'un ensemble à ressort raccordé au mécanisme de compression ; le mécanisme de compression comprend un premier ensemble de compression à piston (5), une tige de piston (6) et un deuxième ensemble de compression à piston (7), qui sont raccordés successivement ; le premier ensemble de compression à piston (5) comprend une chambre étanche (10), une chambre d'eau chaude (11), une première chambre à piston (12) et un ensemble tige de support, qui sont raccordés successivement ; la chambre étanche (10) est en communication avec la chambre d'eau chaude (11), et un orifice d'entrée d'eau chaude (13) est formé sur la chambre d'eau chaude (11) ; un premier orifice d'entrée de fluide (14) est formé au niveau d'une extrémité de la première chambre à piston (12), un premier piston (15) raccordé à la tige de piston (6) est prévu à l'intérieur de la première chambre à piston (12), et des arbres de raccordement sont prévus en paire au niveau de l'autre extrémité de la première chambre à piston (12) ; l'ensemble tige de support comprend une première tige de support (16) et une deuxième tige de support (17), chacune comprenant un levier de compression rectiligne (19) et un bloc de support rotatif (20) agencé sur un côté du levier de compression rectiligne (19) ; les arbres de raccordement sont raccordés de manière mobile sur le levier de compression rectiligne (19) ; chaque bride parmi la première bride (1) et la deuxième bride (2) est pourvue d'un mécanisme de limitation rotatif (21) qui comprend une portion de limitation (22) et une portion tournante (23) lesquelles sont raccordées ensemble ; durant le mouvement du premier ensemble de compression à piston (5) vers le contenant de capsules (3), la portion tournante (23) du mécanisme de limitation rotatif (21) fait tourner la première tige de support (16) et la deuxième tige de support (17) vers le haut, et la portion de limitation (22) du mécanisme de limitation rotatif (21) soutient et limite la première tige de support (16) et la deuxième tige de support (17) ; après le mouvement, le levier de compression rectiligne (19) est en parallèle avec le sens de mouvement du premier ensemble de compression à piston (5) ; et le deuxième ensemble de compression à piston (7) comprend une deuxième chambre à piston (24) et un deuxième piston (25) lequel est prévu dans la deuxième chambre à piston (24), le deuxième piston (25) étant raccordé à la tige de piston (6), et un deuxième orifice d'entrée de fluide (26) étant formé sur la deuxième chambre à piston (24) ; et
l'ensemble à ressort comprend un premier ressort de rappel (8) et un deuxième ressort de rappel (9) agencés en paire, une extrémité du premier ressort de rappel (8) étant raccordé au premier ensemble de compression à piston (5) et l'autre extrémité du premier ressort de rappel (8) étant agencée sur la première bride (1) ou la deuxième bride (2), une extrémité du deuxième ressort de rappel (9) étant raccordée au deuxième ensemble de compression à piston (7) et l'autre extrémité du deuxième ressort de rappel (9) étant agencée sur la première bride (1) ou la deuxième bride (2).

4. Machine à café à capsules selon la revendication 3, dans laquelle le contenant de capsules (3) comprend un logement (27) ; une chambre d'accueil (28), qui est ouverte vers l'extérieur, est prévue au niveau d'une extrémité du logement (27), et utilisée pour accueillir une capsule de café (18) ; un certain nombre de cônes tranchants (33) sont prévus sur le fond de la chambre d'accueil (28) ; et un orifice de sortie traversant de café est formé au niveau de l'autre extrémité du logement (27).

5. Machines à café à capsules selon la revendication 4, dans lesquelles l'ensemble de serrage de capsule (4) est raccordé au premier ensemble de compression à piston (5) ; l'ensemble de serrage de capsule (4) comprend deux dispositifs de serrage qui sont agencés de manière symétrique ; le dispositif de serrage comprenant un corps de dispositif de serrage (29) et une rainure incurvée formée sur un côté du corps de dispositif de serrage (29), et la rainure incurvée comprenant un segment de coulissement de capsule (30) et un segment de serrage de capsule (31) ; et le corps de dispositif de serrage (29) est raccordé à la chambre étanche (10) du premier ensemble de compression à piston (5).

6. Machine à café à capsules selon la revendication 5, dans laquelle des arbres tournants (38) sont prévus en paire sur la chambre étanche (10) et sont raccordés de manière mobile à une extrémité supérieure du corps de dispositif de serrage (29), et une extrémité inférieure du corps de dispositif de serrage (29) est raccordée à la chambre étanche (10) par un ressort de limitation.

7. Machine à café à capsules selon la revendication 3, dans laquelle un élément d'étanchéisation annulaire est prévu sur une paroi interne de la chambre étanche (10), et une paroi interne de l'élément d'étanchéisation annulaire est raccordée à une paroi externe du logement (27) suivant une manière étanche.

8. Machine à café à capsules selon la revendication 7, dans laquelle un trou traversant (32) en communication avec la chambre d'eau chaude (11) est formé sur une surface de fond de la chambre étanche (10), et un certain nombre de cônes tranchants (33) sont distribués de manière uniforme sur la surface de fond de la chambre étanche (10) entre le trou traversant (32) et l'élément d'étanchéisation annulaire.

9. Machine à café à capsules selon la revendication 3, dans laquelle chaque tige parmi la première tige de support (16) et la deuxième tige de support (17) et pourvue d'un crochet rotatif (34) qui est raccordé au bloc de support rotatif (20) par une plaque de raccordement ; durant le processus de retour du premier ensemble de compression à piston (5), lorsque la première tige de support (16) et la deuxième tige de support (17) ne peuvent pas tourner vers le bas en raison de leur propre gravité, le crochet rotatif (34) est en raccordement de contact avec la portion tournante (23), et le crochet rotatif (34) permet à la première tige de support (16) et à la deuxième tige de support (17) de tourner vers le bas.

10. Machine à café à capsules selon la revendication 3, dans laquelle un premier fluide et un deuxième fluide sont remplis dans la première chambre à piston (12) et la deuxième chambre à piston (24) respectivement par l'intermédiaire du premier orifice d'entrée de fluide (14) et du deuxième orifice d'entrée de fluide (26) ; et le premier fluide et le deuxième fluide étant l'eau ou l'huile hydraulique.
